(19) Europäisches Patentamt / European Patent Office / Office européen des brevets

(11) **EP 4 085 998 A1**

(12) **EUROPEAN PATENT APPLICATION**
published in accordance with Art. 153(4) EPC

(43) Date of publication:
**09.11.2022 Bulletin 2022/45**

(21) Application number: **20909859.9**

(22) Date of filing: **19.10.2020**

(51) International Patent Classification (IPC):
*B01J 23/46* (2006.01)      *B01J 23/10* (2006.01)
*B01J 21/06* (2006.01)      *B01J 37/00* (2006.01)
*B01J 37/02* (2006.01)      *B01J 37/08* (2006.01)
*B01J 35/02* (2006.01)      *C01B 7/04* (2006.01)

(52) Cooperative Patent Classification (CPC):
**B01J 21/06; B01J 23/10; B01J 23/46; B01J 35/02;
B01J 37/00; B01J 37/02; B01J 37/08; C01B 7/04**

(86) International application number:
**PCT/KR2020/014259**

(87) International publication number:
**WO 2021/137399 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2019   KR 20190179875**

(71) Applicant: **Hanwha Solutions Corporation
Jung-gu
Seoul 04541 (KR)**

(72) Inventors:
• YUN, Seong Ho
  Daejeon 34128 (KR)
• CHUN, Jeong Hwan
  Daejeon 34128 (KR)
• CHO, Young Jin
  Daejeon 34128 (KR)

(74) Representative: **Klunker IP
Patentanwälte PartG mbB
Destouchesstraße 68
80796 München (DE)**

(54) **MOLDING CATALYST FOR HYDROGEN CHLORIDE OXIDATION REACTION, AND METHOD FOR PRODUCING SAME**

(57)   The present invention relates to a molding catalyst and a method for producing the same, wherein the molding catalyst is used in the Deacon process for commercial production of chlorine using hydrogen chloride oxidation reaction, exhibits only a small reduction in catalytic activity even when exposed to harsh reaction conditions to thus be durable, and has superb mechanical strength to be suitable for use in a fixed bed catalytic reactor.

EP 4 085 998 A1

**Description**

TECHNICAL FIELD

The present invention relates to a molding catalyst and a method for producing the same, wherein the molding catalyst is used in the Deacon process for commercial production of chlorine using hydrogen chloride oxidation reaction, exhibits only a small reduction in catalytic activity even when exposed to harsh reaction conditions to thus be durable, and has superb mechanical strength to be suitable for use in a fixed bed catalytic reactor.

BACKGROUND ART

The Deacon process was developed by Henry Deacon in 1868 as a catalytic gas phase oxidation reaction of hydrogen chloride, and is an eco-friendly and energy-efficient process that regenerates hydrogen chloride, which is a by-product generated during the production of polyurethane and polycarbonate, into chlorine. Since a $CuO/CuCl_2$ catalyst used in the early Deacon process has very low activity, it must be carried out at a reaction temperature of 400°C or higher. During the reaction, since copper oxide as an active material is converted into a highly volatile copper chloride-based material and then disappears, there is a problem in that the catalyst durability is low.

In 1999, Sumitomo Chemical developed a new type of catalyst for the Deacon process in which ruthenium oxide as an active material was supported on a rutile-type titania carrier in an epitaxial direction. This catalyst has the characteristic of generating chlorine even at a low reaction temperature of 300°C. However, since the hydrogen chloride oxidation reaction is an exothermic reaction, a temperature higher than a reaction temperature is locally formed in a hot-spot inside a reaction tube. This causes a calcination phenomenon that reduces the dispersion degree of ruthenium oxide as an active material, and thus there is a problem in that the activity of the catalyst continuously decreases during long-term reaction operation.

As described above, it is very difficult to satisfy the durability, activity, and lifespan of the catalyst in the Deacon process. In addition, most of these catalysts have many restrictions on their use because the types of reactor, operating conditions, and the like are difficult. In particular, when a powder-type catalyst is used in a fixed bed reactor, a differential pressure is generated at the front and rear ends of a catalyst bed, which may cause a problem in that operation is impossible. Therefore, in order to solve the various problems described above, research into various catalysts is currently in progress.

For example, Korean Patent Publication No. 10-2012-0040701 relates to a method for producing chlorine by vapor phase oxidation having a supported catalyst based on ruthenium, and discloses that a catalyst support has a plurality of pores having a pore diameter of more than 50 nm and supports nanoparticles containing ruthenium and a ruthenium compound as a catalytically active ingredient.

Korean Patent Publication No. 10-2011-0107350 relates to a catalyst for gas phase reaction which includes one or more active metals on a support containing aluminum oxide and has high mechanical stability, and discloses that the aluminum oxide component of the support substantially includes $\alpha$-aluminum oxide. In particular, the catalyst contains, on the support made of $\alpha$-$Al_2O_3$, a) 0.001 to 10 wt% of ruthenium, copper, and/or gold, b) 0.1 to 10 wt% of nickel, c) 0 to 5 wt% of one or more alkaline-earth metals, d) 0 to 5 wt% of one or more alkali metals, e) 0 to 5 wt% of one or more rare-earth elements, and f) a material selected from palladium, platinum, iridium, and rhenium, based on the total weight of the catalyst. The catalyst is used in hydrogen chloride oxidation (Deacon reaction).

Korean Patent Publication No. 10-2013-0100282 discloses a catalyst for producing chlorine by catalytic gas phase oxidation of hydrogen chloride with oxygen, wherein the catalyst includes calcined tin dioxide as a supporting material and at least one halogen-containing ruthenium compound, and the use of the catalyst.

Lastly, non-patent literature relates to a catalyst for the selective catalytic reduction of NOx with $NH_3$ and discloses a Ce-Zr-Ti oxide catalyst as a catalyst for oxidation reaction.

As described above, a variety of catalysts used for hydrogen chloride oxidation reaction have been researched and developed. The present invention has been completed to develop a catalyst for hydrogen chloride oxidation reaction, which is not restricted by the type of reactor, operating conditions, and the like, has no restrictions on use, and is easy to handle, by providing excellent durability and mechanical strength of a catalyst in the Deacon process.

(Patent Literature 1) Korean Patent Publication No. 10-2012-0040701 (2012.04.27)
(Patent Literature 2) Korean Patent Publication No. 10-2011-0107350 (2011.09.30)
(Patent Literature 3) Korean Patent Publication No. 10-2013-0100282 (2013.09.10)
(Non-Patent Literature 4) A CeO2/ZrO2-TiO2 Catalyst for the Selective Catalytic Reduction of NOx with NH3 (Catalysts, pp.592. 2018.08.)

DESCRIPTION OF EMBODIMENTS

TECHNICAL PROBLEM

The present invention aims to solve the above-described problems.

An object of the present invention is to solve a calcination phenomenon of ruthenium oxide occurring in a commercial production process of chlorine through hydrogen chloride oxidation reaction to thereby maintain initial catalyst activity despite long-time catalyst operation.

An object of the present invention is to provide a catalyst of a pellet form in a commercial production process of chlorine through hydrogen chloride oxidation reaction to thereby provide high mechanical strength so as not to be crushed during the process.

SOLUTION TO PROBLEM

In order to achieve the above-described objects of the present invention and realize the characteristic effects of the present invention described below, the characteristic configuration of the present invention is as follows.

According to an embodiment of the present invention, there is provided a molding catalyst for hydrogen chloride oxidation reaction, which includes ruthenium oxide, a metal oxide additive, and a molding support.

According to an embodiment of the present invention, there is provided a method for producing a molding catalyst for hydrogen chloride oxidation reaction, wherein the molding catalyst is produced by impregnating at least one selected from a metal oxide additive and ruthenium oxide on a molding support.

According to an embodiment of the present invention, there is provided a molding catalyst for hydrogen chloride oxidation reaction which is produced by the producing method.

According to an embodiment of the present invention, there is provided a method for producing chlorine through hydrogen chloride oxidation reaction in the presence of the molding catalyst.

ADVANTAGEOUS EFFECTS OF DISCLOSURE

A catalyst according to the present invention solves a calcination phenomenon of ruthenium oxide occurring in a commercial production process of chlorine through hydrogen chloride oxidation reaction to thereby maintain initial catalyst activity despite long-time catalyst operation.

An catalyst according of the present invention is provided as a catalyst of a pellet form in a commercial process of chlorine through hydrogen chloride oxidation reaction to thereby provide high mechanical strength so as not to be crushed during the process.

A catalyst according to the present invention provides high catalytic activity and durability, so that the catalyst is not restricted by the type of reactor, operating conditions, and the like, has no restrictions on use, and is easy to handle.

BEST MODE

Hereinafter, the structure and operation of the present invention will be described in more detail with reference to preferred examples of the present invention. However, these examples are shown by way of illustration and should not be construed as limiting the present invention in any sense. Since contents not described herein can be sufficiently technically inferred by those of ordinary skill in the art, descriptions thereof will be omitted.

Example 1

A clay was formed by evenly mixing 20 g of titania powder (SAKAI), 0.4 g of a cellulose-based organic binder (YUKEN), 2.5 g of $TiO_2$ sol (SAKAI), and 9.0 g of DIW, and a molding support was formed by extruding the clay. The molding support was dried in an oven at 100°C for 4 hours. After cutting the dried molding support at intervals of 2-3 mm, the molding support was calcined in an electric furnace at 600°C for 3 hours to complete a $TiO_2$ molding support. A precursor solution in which 2.6 g of cerium nitrate hydrate (Kanto) and 0.8 g of ruthenium chloride hydrate (KOJIMA) were simultaneously dissolved in 6.0 g of DIW was impregnated in the $TiO_2$ molding support and dried in an oven at 100°C for 4 hours. The dried molding support was calcined in an electric furnace at 350°C for 3 hours to obtain a molding catalyst in which an amount of ruthenium oxide was 2.6% and an amount of ceria was 5.0%. That is, after pre-production of the molding support, metal oxide and ruthenium oxide were simultaneously impregnated (Method 2).

Example 2

First, a $TiO_2$ molding support was prepared in the same manner as in Example 1. A precursor solution in which 2.6 g of cerium nitrate hydrate (Kanto) was dissolved in 6.0 g of DIW was impregnated in the $TiO_2$ molding support and dried in an oven at 100°C for 4 hours. The dried molding support was calcined in an electric furnace at 600°C for 3 hours to obtain a molding support in which an amount of ceria was 5.0%. A precursor solution in which 0.8 g of ruthenium chloride hydrate (KOJIMA) was dissolved in 6.0 g of DIW was impregnated in 20 g of the molding support and dried in an oven at 100°C for 4 hours. Finally, the dried molding support was calcined in an electric furnace at 350°C for 3 hours to obtain a molding catalyst in which an amount of ruthenium oxide was 2.6% and an amount of ceria was 5.0%. That is, after pre-production of the molding support, metal oxide was added and ruthenium oxide was impregnated (Method 3).

Example 3

First, a $TiO_2$ molding support was prepared in the same manner as in Example 1. A precursor solution in which 1.3 g of cerium nitrate hydrate (Kanto) and 1.3 g of zirconium chloride hydrate (Kanto) were simultaneously dissolved in 6.0 g of DIW was impregnated in the $TiO_2$ molding support and dried in an oven at 100°C for 4 hours. The dried molding support was calcined in an electric furnace at 600°C for 3 hours to obtain a molding support in which an amount of ruthenium oxide was 2.5% and an amount of zirconia was 2.5%. A precursor solution in which 0.8 g of ruthenium chloride hydrate (KOJIMA) was dissolved in 6.0 g of DIW was impregnated in 20 g of the molding support and dried in an oven at 100°C for 4 hours. Finally, the dried molding support was calcined in an electric furnace at 350°C for 3 hours to obtain a molding catalyst in which an amount of ruthenium oxide was 2.6%, an amount of ceria was 2.5%, and an amount of zirconia was 2.5%. That is, after pre-production of the molding support, metal oxide was added and ruthenium oxide was impregnated (Method 3).

Example 4

First, a $TiO_2$ molding support was prepared in the same manner as in Example 1. A precursor solution in which 2.6 g of zirconium chloride hydrate (Kanto) was dissolved in 6.0 g of DIW was impregnated in the $TiO_2$ molding support and dried in an oven at 100°C for 4 hours. The dried molding support was calcined in an electric furnace at 600°C for 3 hours to obtain a molding support in which an amount of zirconia was 5.0%. A precursor solution in which 0.8 g of ruthenium chloride hydrate (KOJIMA) was dissolved in 6.0 g of DIW was impregnated in 20 g of the molding support and dried in an oven at 100°C for 4 hours. Finally, the dried molding support was calcined in an electric furnace at 350°C for 3 hours to obtain a molding catalyst in which an amount of ruthenium oxide was 2.6% and an amount of zirconia was 5.0%. That is, after pre-production of the molding support, metal oxide was added and ruthenium oxide was impregnated (Method 3).

Example 5

A precursor solution in which 2.6 g of cerium nitrate hydrate (Kanto) was dissolved in 6.0 g of DIW was impregnated in 20.0 g of titania powder (SAKAI) and dried in an oven at 100°C for 4 hours. The dried powder was calcined in an electric furnace at 350°C for 3 hours to obtain a powder support in which an amount of ceria was 5.0%. A clay was formed by evenly mixing 20 g of the powder support, 0.4 g of a cellulose-based organic binder (YUKEN), 2.5 g of $TiO_2$ sol (SAKAI), and 9.0 g of DIW, and a molding support was formed by extruding the clay. The molding support was dried in an oven at 100°C for 4 hours. After cutting the dried molding support at intervals of 2-3 mm, the molding support was calcined in an electric furnace at 600°C for 3 hours to complete a molding support. A precursor solution in which 0.8 g of ruthenium chloride hydrate (KOJIMA) was dissolved in 6.0 g of DIW was impregnated in 20 g of the molding support and dried in an oven at 100°C for 4 hours. Finally, the dried molding support was calcined in an electric furnace at 350°C for 3 hours to obtain a molding catalyst in which an amount of ruthenium oxide was 2.6% and an amount of ceria was 5.0%. That is, after pre-addition of metal oxide, catalyst molding was performed and ruthenium oxide was impregnated (Method 1).

The experiment was conducted under the following conditions to evaluate the catalytic abilities of Examples.

Experimental Example 1 - Evaluation of mechanical strength of molding catalyst

In order to evaluate the mechanical strength of the molding catalyst, the crushing strength in the longitudinal direction was measured using Chatillon force gauge DFE2-025 (100N x 0.1).

After flattening the upper and lower ends of the molding catalyst sample using sandpaper, the molding catalyst was placed on a measuring stand in the vertical direction. The force gauge was brought into contact with the molding catalyst at a descending speed of 5 mm/sec, and the crushing strength was measured at the moment the molding catalyst was destroyed. After measuring the crushing strengths of 15 samples for each molding catalyst, the average value of the remaining values excluding the maximum and minimum values was recorded. Results thereof are shown in Table 1.

Experimental Example 2 - Evaluation of activity of molding catalyst

In order to evaluate the activity of the molding catalyst, hydrogen chloride oxidation reaction was performed in a fixed bed reaction tube made of nickel 201.

1.35 g of the molding catalyst of Example was diluted with 7 g of alumina pellet (Saint-Gobain) and then filled in a fixed bed reaction tube with an outer diameter of 1 inch. The reaction temperature was set to 300°C based on the catalyst bed, and the hydrogen chloride oxidation reaction was performed by supplying hydrogen chloride and oxygen gas as reactants at a rate of 100 ml/min at normal pressure. After 22 hours had elapsed from the start of the reaction and the catalytic activity reached a sufficiently stable state, the gas at the rear end of the reaction tube was circulated through a 15% aqueous potassium iodide solution, and sampling was performed for 5 minutes. Thereafter, the production amount of chlorine was measured by iodometric titration, and the space time yield (STY) of hydrogen chloride was calculated by Equation 1 below. Results thereof are shown in Table 1.

[Equation 1]

$$\text{Space time yield} = \frac{\text{Amount of chlorine gas} \, (g_{cl_2})}{(\text{Amount of catalyst} \, (g_{cat})) \times (\text{Re action time} \, (hr))}$$

Experimental Example 3- Evaluation of thermal stability of molding catalyst

In order to evaluate the durability of the molding catalyst, after carrying out the hydrogen chloride oxidation reaction at a reaction temperature (380°C) higher than an existing reaction temperature (300°C), the reaction proceeded at the existing reaction temperature (300°C) again. The catalytic activities were compared before and after exposure to harsh conditions.

A conversion rate A was calculated by measuring the amount of chlorine produced after the reaction tube filled with the prepared pellet molding catalyst was performed under reaction conditions of 300°C based on the catalyst bed for 22 hours and the catalytic activity reached a sufficiently stable state. Then, a conversion rate B was calculated by measuring the amount of chlorine produced after the reaction was performed for 24 hours under severe conditions of 380°C based on the catalyst bed and the catalyst bed temperature was lowered to 300°C again. The thermal stabilities of the catalyst were compared by calculating the deterioration degree as in Equation 2 below using the ratio of the conversion rate A to the conversion rate B.

[Equation 2]

$$\text{Deterioration degree} \, \% = 100 - \left( \frac{Conversion \, rate \, B}{Conversion \, rate \, A} \times 100 \right)$$

[Table 1]

|  | Experimental Example 1: Crushing strength (N) | Experimental Example 2: Space time yield (STY) |
|---|---|---|
| Example 1 | 32.0 | 0.52 |
| Example 2 | 48.7 | 1.25 |
| Example 5 | 5.2 | 0.96 |

Referring to the results in Table 1, Examples 1, 2, and 5 showed excellent results in crushing strength or space time yield. However, in the case of Example 1, the mechanical strength of the catalyst was excellent, but the conversion rate of the oxidation reaction was somewhat bad. In the case of Example 5, it was advantageous in terms of space time yield, but the mechanical strength of the catalyst was weak, and thus there is a risk of being crushed into powder during the process. Therefore, it can be confirmed that it is difficult to use in the commercialization process. On the other hand, in the case of Example 2, it was confirmed that the crushing strength was excellent and the oxidation reaction activity was also excellent, and thus it was a catalyst very suitable for the commercialization process.

[Table 2]

|  | Experimental Example 1 | Experimental Example 2 | | Experimental Example 3 |
| --- | --- | --- | --- | --- |
|  | Crushing strength (N) | STY before exposure to harsh conditions | STY after exposure to harsh conditions | Deterioration degree |
| Example 2 | 48.7 | 1.25 | 0.80 | 36 |
| Example 3 | 57.8 | 1.79 | 1.44 | 20 |
| Example 4 | 39.3 | 2.15 | 1.72 | 20 |

In the case of Examples 2 to 4, when produced according to Method 3 described above by including metal oxide, it was confirmed that the strength, activity, and deterioration of the catalyst were excellent on the whole. In particular, in the case of Example 3 in which ceria and zirconia metal oxide were included in the same content ratio, it was confirmed that it was the most suitable catalyst for long-term catalyst operation in the commercial process because both the mechanical strength and the catalyst durability were excellent. Accordingly, it was confirmed that the calcination phenomenon of ruthenium oxide occurring in the commercial process of chlorine could be solved, and the initial catalytic activity could be maintained despite long-time catalyst operation.

Therefore, it was confirmed that, when exposed to harsh reaction conditions, in particular, in the Deacon process that is the commercial production process of chlorine through the hydrogen chloride oxidation reaction, the molding catalyst according to the present invention has high durability because the reduction in catalytic activity is small, and can be provided as a molding catalyst having excellent mechanical strength.

While the present invention has been described by particular matters such as specific components and limited embodiments and drawings, this is provided only for helping the comprehensive understanding of the present invention. The present invention is not limited to the above-described embodiments, and it will be understood by those of ordinary skill in the art that various modifications and variations can be made thereto without departing from the scope of the present invention.

Therefore, it will be understood that the spirit of the present invention should not be limited to the above-described embodiments and the claims and all equivalent modifications fall within the scope of the present invention.

MODE OF DISCLOSURE

Reference is made to the accompanying drawing which shows, by way of illustration, specific embodiments in which the present invention may be practiced. The embodiments will be described in detail in such a manner that the present invention can be carried out by those of ordinary skill in the art. It should be understood that various embodiments of the present invention are different from each other, but need not be mutually exclusive. For example, certain shapes, structures, and features described herein may be implemented in other embodiments without departing from the spirit and scope of the present invention in connection with one embodiment. In addition, it will be understood that the locations or arrangement of individual components in the disclosed embodiments can be changed without departing from the spirit and scope of the present invention. Therefore, the following detailed description is not to be taken in a limiting sense, and the scope of the present invention is to be limited only by the appended claims and the entire scope of equivalents thereof, if properly explained.

Hereinafter, preferred embodiments of the present invention will be described in detail with reference to the accompanying drawing, so that those of ordinary skill in the art can easily carry out the present invention.

According to an embodiment of the present invention, there is provided a molding catalyst for hydrogen chloride oxidation reaction, which includes ruthenium oxide, a metal oxide additive, and a molding support.

In particular, the molding catalyst according to the present invention adjusts or improves the durability, mechanical strength, and catalytic activity of the catalyst by supporting ruthenium oxide on the molding support while controlling the content ratio of the metal oxide additive, the order of impregnation, and the calcination temperature after impregnation.

In this case, the molding catalyst includes 1 to 10 parts by weight of the ruthenium oxide and 0.5 to 10 parts by weight of the metal oxide based on 100 parts by weight of the molding support. That is, since the catalyst is molded by including at least one metal oxide, the activity and durability of the catalyst can be greatly improved.

According to an embodiment of the present invention, the metal oxide additive includes at least one selected from ceria, zirconia, alumina, and silica. Ceria and zirconia may be preferably provided, and the content ratio of ceria to zirconia may be 1:0.5 to 1. Preferably, the content ratio of ceria to zirconia may be 1:1. When the metal oxide is provided in the above range, it can be confirmed from the results of Table 2 of Examples to be described below that the case of Example 3 in which ceria and zirconia metal oxide are included in the same content ratio is the most suitable catalyst for long-term catalyst operation in the commercial process because both the mechanical strength and the catalyst durability are excellent.

According to an embodiment of the present invention, the metal oxide may be provided in the form of a precursor thereof. For example, a cerium precursor may be present in the form of a complex salt, and may include a cerium compound, and in particular, metal salts such as cerium nitrate, cerium acetate, or cerium chloride. Cerium nitrate is preferably provided, but the present invention is not limited thereto. After impregnated in the support in the form of a precursor, a final molding catalyst is provided through drying and calcination steps.

According to an embodiment of the present invention, the molding support may be provided by including at least one selected from alumina, titania, and zirconia. A titania support may be preferably provided.

The titania support may be, for example, anatase-type titania, rutile-type titania, amorphous titania, or a mixture thereof. In addition, the titania support may include an oxide such as alumina, zirconia, or niobium oxide. Rutile-type titania is preferably provided. For example, titania available from Sakai may be provided, but the present invention is not limited thereto. A specific surface area of the titania support may be measured by a commonly used BET method, and may be 5 to 300 $m^2/g$, and preferably 5 to 50 $m^2/g$. When the specific surface area is greater than the above range, there may be difficulties in securing thermal stability of ruthenium oxide. When the specific surface area is less than the above range, there is a problem in that high dispersion is difficult and the catalytic activity is also lowered. Therefore, the above range is preferable.

In the case of the aluminum support, $\alpha$-alumina is preferably provided. Preferably, since the $\alpha$-alumina has a low BET specific surface area, absorption of other impurities is difficult to occur. In this case, the specific surface area is 10 to 500 $m^2/g$, and preferably 20 to 350 $m^2/g$.

The zirconia support has pores in the range of 0.05 to 10 $\mu$m and has the same specific surface area as described above.

According to an embodiment of the present invention, the catalyst may be provided in at least one selected from powder, particle, and pellet forms. Preferably, the catalyst may be provided in the pellet form. In this case, when the diameter of the pellet is too large, it is disadvantageous in the terms of catalytic activity. Therefore, the diameter of the pellet is preferably 1 to 10 mm.

According to an embodiment of the present invention, the molding catalyst has a crushing strength of 5 to 200 N.

According to an embodiment of the present invention, the molding catalyst has a space time yield according to Chemical Formula 1 below.

[Equation 1]

$$\text{Space time yield} = \frac{\text{Amount of chlorine gas}\,(g_{cl_2})}{(\text{Amount of catalyst}\,(g_{cat})) \times (\text{Reaction time}\,(hr))}$$

According to an embodiment of the present invention, the molding catalyst has the deterioration degree according to Chemical Formula 2 below.

[Equation 2]

$$\text{Deterioration degree}\,(\%) = 100 - \left(\frac{Conversion\ rate\ B}{Conversion\ rate\ A} \times 100\right)$$

Data regarding the crushing strength, space time yield (STY), and deterioration degree can be confirmed from the results of Experimental Examples to be described below. That is, the molding catalyst according to the present invention improves the catalytic activity, durability, and mechanical strength of the catalyst by supporting ruthenium oxide on the molding support while controlling the content ratio of the metal oxide such as ceria and zirconia in the support, the order of impregnation, and the calcination temperature after impregnation. This can be provided as a catalyst very suitable for the commercial production process of chlorine through the hydrogen chloride oxidation reaction.

According to an embodiment of the present invention, in the case of the molding catalyst, ruthenium has an oxidation number of 4, ruthenium dioxide ($RuO_2$) is preferably provided, and the molding catalyst is used to produce chlorine by oxidizing hydrogen chloride. However, the oxidation number and the form are not limited thereto.

On the other hand, according to an embodiment of the present invention, there is provided a method for producing a molding catalyst for hydrogen chloride oxidation reaction. Hereinafter, the same contents as the producing method described above may be applied, and redundant descriptions thereof will be omitted. In addition, the order in the producing method may be modified as necessary, which means that modifications can be made freely at the level of those of ordinary skill in the art.

According to an embodiment of the present invention, there is provided a method for producing a molding catalyst for hydrogen chloride oxidation reaction, wherein the molding catalyst is produced by impregnating at least one selected from a metal oxide additive and a ruthenium precursor on a molding support.

According to an embodiment of the present invention, the method for producing a molding catalyst for hydrogen chloride oxidation reaction may further include drying and calcination as necessary. Furthermore, mechanical strength of the molding catalyst may be significantly improved by changing the order of impregnation of the metal oxide additive and the calcination temperature after impregnation. It is provided according to Methods 1 to 3 described below, and Method 2 or Method 3 may be preferably provided.

According to an embodiment of the present invention, the impregnation is characterized in that the support is molded by pre-adding a metal oxide additive, and a ruthenium precursor is post-added and impregnated (Method 1). For example, it may be provided by including: preparing a solution in which a metal oxide additive is dissolved and impregnating the solution on a support; obtaining and molding a powder support by primary drying and calcination; preparing a solution in which a ruthenium precursor is dissolved and impregnating the solution on the molded powder support; and obtaining a final molded support by secondary drying and calcination.

According to an embodiment of the present invention, the impregnation is characterized in that the support is first molded and the metal oxide additive and the ruthenium precursor are simultaneously added and impregnated (Method 2). For example, it may be provided by including: molding a support; preparing a solution in which a metal oxide additive and a ruthenium precursor are dissolved and impregnating the solution on the support; and obtaining a molding support by drying and calcination.

According to an embodiment of the present invention, the impregnation is characterized in that the support is molded, the metal oxide additive is pre-added and impregnated, and the ruthenium precursor is post-added and impregnated (Method 3). For example, it may be provided by including: molding a support; preparing a solution in which at least one selected from metal oxide additives is dissolved and impregnating the solution on the support; obtaining a molding support by primary drying and calcination; preparing a solution in which a ruthenium precursor is dissolved and impregnating the solution on the molding support; and obtaining a final molded support by secondary drying and calcination.

According to an embodiment of the present invention, the metal oxide additive provided in Methods 1 to 3 includes at least one selected from a chloride-based compound, a nitric acid-based compound, and a sulfuric acid-based compound. More specifically, cerium, zirconium, aluminum, and silicon precursors may be provided in the form of complex salts, and may be provided as the chloride-based compound, the nitric acid-based compound, and the sulfuric acid-based compound.

For example, the cerium precursor may be present in the form of the complex salt, and may include a cerium compound, and in particular, metal salts such as cerium nitrate or cerium chloride. Preferably, after cerium nitrate is provided and impregnated in the support, the cerium nitride is finally provided to the molding catalyst in the form of ceria through the drying and calcination process.

According to an embodiment of the present invention, halide is preferably provided as the ruthenium precursor, and ruthenium chloride including chloride is most preferably provided as the ruthenium precursor. In some cases, a hydrate of the ruthenium compound may be provided as the ruthenium compound, but the present invention is not limited thereto.

The ruthenium chloride may be used in the powder form and mixed in a solvent, and a solid support is suspended in the solvent to form a precipitate, so that the precipitate is deposited and supported on the solid support. A temperature provided during the deposition is 0°C to 100°C, and preferably 0°C to 50°C, and a pressure is a commonly applied pressure of 0.1 to 1 MPa, and preferably the atmospheric pressure. The supporting may be performed in an air atmosphere or an inert gas atmosphere such as nitrogen, helium, argon, or carbon dioxide. In this case, water vapor may be included. The supporting is preferably provided in the inert gas atmosphere, but the present invention is not limited thereto.

The solvent in which the ruthenium precursor is dissolved is provided by including at least one selected from water, alcohol, and nitrile. The water provided herein is high-purity water such as distilled water, ion-exchanged water, or deionized water (DIW). When the water used herein contains impurities, the impurities may adhere to the catalyst and reduce the activity of the catalyst. In the case of alcohol, the organic solvent may be a monoalcohol, and a C3 or higher primary alcohol is provided. A C3 alcohol-based organic solvent is preferably provided, and 1-propanol is preferably provided. By utilizing high wettability and hydrophobicity of the solution, the ruthenium component can be supported only on the outer surface of the titania support in which a hydroxyl group (-OH) is present. Therefore, it is possible to provide an effect of increasing the dispersion degree of ruthenium supported on the surface of the titanium oxide molding support or the powder support. In addition, although there is no limitation on the amount of the solvent provided herein, if the amount of the solvent is too large, the drying time increases. Therefore, the amount of the solvent can be adjusted freely at the level of those of ordinary skill in the art.

According to an embodiment of the present invention, in the step of molding the support described in Method 2 or Method 3, the molding support maybe produced by mixing an organic binder, an inorganic binder, and water with a solid support. The molded catalyst is applicable to a fixed bed reactor. Therefore, the molded catalyst is not restricted by the type of reactor, operating conditions, and the like, has no restrictions on use, and is easy to handle. In particular, the catalyst can be used without differential pressure when applied to a fixed bed reactor and can increase catalytic activity and improve thermal stability, thereby providing improved durability and mechanical strength.

The organic binder is provided by including at least one selected from methyl cellulose, hydroxyethyl cellulose, sodium carboxymethyl cellulose, purified starch, dextrin, polyvinyl alcohol, polyvinyl butyral, polymethyl methacrylate, polyethylene glycol, paraffin, wax emulsion, and microcrystalline wax, but the present invention is not limited thereto. Since the organic binder is included, moldability can be improved.

The inorganic binder includes at least one selected from alumina sol, silica sol, titania sol, and zirconia sol. Since the inorganic binder is included, mechanical properties can be improved.

According to an embodiment of the present invention, the molded support may be completed as a final molding support by drying and calcination. Of course, the order and number of drying and calcination can be adjusted as necessary.

The drying is performed at 10°C to 120°C for 3 hours to 5 hours. The drying can be performed while performing rotating and stirring. The drying can be performed by vibrating a drying container or using a agitator provided in a container, but the present invention is not limited thereto. The drying temperature may be in the range from room temperature, which is normally applied, to 100°C, and the pressure may be in the range from 0.1 to 1 MPa, which is normally applied. The pressure may be preferably atmospheric pressure.

The calcination may be performed at 350°C to 700°C for 2 hours to 6 hours, and the cooling is performed to room temperature. The calcination temperature is preferably 350°C to 700°C. In addition, examples of oxidizing gas provided for calcination may include oxygen-containing gas. The oxygen concentration is in the range of 1 to 30 vol%, which is normally applied. As an oxygen source, air or pure oxygen is generally provided, and inert gas or water vapor may be included as necessary. The oxidizing gas may be preferably air. The oxidizing gas is calcined at about 350°C for about 3 hours in an electric furnace under air flow and cooled to room temperature. The calcination oxidizes cerium to ceria, which is cerium oxide. The cerium oxide can secure stability even at a relatively high temperature. In the case of the reaction involving the cerium oxide catalyst, thermal stability is provided at an average temperature of 250°C to 600°C, and preferably 300°C to 550°C. When the average temperature is higher than 550°C, there is a disadvantage in chlorine conversion rate during chlorine production, and when the average temperature is lower than 300°C, the catalytic activity of cerium is reduced. Therefore, it is preferable to ensure thermal stability by controlling the reaction in the above range.

According to an embodiment of the present invention, there is provided a method for producing chlorine through hydrogen chloride oxidation reaction in the presence of the catalyst. As the mode of the reaction, a fixed bed mode, a fluidized bed mode, a gas phase reaction, and the like may be provided. Preferably, the gas phase reaction is provided. The oxidation reaction is an equilibrium reaction and, when the oxidation reaction is performed at extremely high temperature, the equilibrium conversion rate decreases. Therefore, it is preferable to carry out the oxidation reaction at a relatively low temperature. The reaction temperature is usually in the range of 100°C to 500°C, and preferably 280°C to 380°C. In addition, the reaction pressure is usually about 0.1 to about 5 MPa. As the oxygen source, air may be used, or pure oxygen may be used. The theoretical molar amount of oxygen relative to hydrogen chloride is 1/4 mole, but 0.1 to 10 times oxygen is typically provided. In addition, the supply rate of hydrogen chloride is expressed by the gas supply rate per 1 L of catalyst (L/h; 0°C, converted to 1 atm), that is, GHSV, and is usually about 10 to about 20000 $h^{-1}$. However, in this case, the amount of the catalyst added may be slightly changed depending on the temperature, the amount of the catalyst, and the amount of the chlorine product.

## Claims

1. A molding catalyst for hydrogen chloride oxidation reaction, comprising 1 to 10 parts by weight of ruthenium oxide and 0.5 to 10 parts by weight of metal oxide based on 100 parts by weight of a molding support.

**2.** The molding catalyst of claim 1, wherein the metal oxide additive includes at least one selected from ceria, zirconia, alumina, and silica.

**3.** The molding catalyst of claim 2, wherein a content ratio of ceria:zirconia in the metal oxide additive is 1:0.5 to 1.

**4.** The molding catalyst of claim 1, wherein the molding support includes at least one selected from alumina, titania, and zirconia.

**5.** The molding catalyst of claim 1, wherein the molding catalyst is at least one selected from powder, particle, and pellet forms.

**6.** The molding catalyst of claim 5, wherein the pellet form has a diameter of 1 to 10 mm.

**7.** The molding catalyst of claim 1, wherein the molding catalyst has a crushing strength of 5 to 200 N.

**8.** A method for producing a molding catalyst for hydrogen chloride oxidation reaction, wherein the molding catalyst is produced by impregnating at least one selected from a metal oxide additive and ruthenium oxide on a molding support.

**9.** The method of claim 8, further comprising performing drying and calcination after the impregnating.

**10.** The method of claim 8, wherein the impregnating is performed by pre-adding a metal oxide additive to mold a support, and performing impregnation by post-adding ruthenium oxide.

**11.** The method of claim 8, wherein the impregnating is performed by molding a support, and performing impregnation by simultaneously adding a metal oxide additive and ruthenium oxide.

**12.** The method of claim 8, wherein the impregnating is performed by molding a support, performing impregnation by pre-adding a metal oxide additive, and performing impregnation by post-adding ruthenium oxide.

**13.** The method of claim 8, wherein the metal oxide additive includes at least one selected from a chlorine-based compound, a nitric acid-based compound, and a sulfuric acid-based compound.

**14.** The method of claim 8, wherein the molding support includes at least one selected from alumina, titania, and zirconia.

**15.** The method of claim 9, wherein the drying is performed at 10°C to 120°C for 3 hours to 5 hours.

**16.** The method of claim 9, wherein the calcination is performed at 350°C to 700°C.

**17.** A method for producing chlorine through hydrogen chloride oxidation reaction in the presence of the catalyst according to claim 1.

**18.** The method of claim 17, wherein the hydrogen chloride oxidation reaction is performed at 280°C to 380°C.

**EP 4 085 998 A1**

## INTERNATIONAL SEARCH REPORT

| International application No. |
|---|
| **PCT/KR2020/014259** |

### A. CLASSIFICATION OF SUBJECT MATTER

**B01J 23/46**(2006.01)i; **B01J 23/10**(2006.01)i; **B01J 21/06**(2006.01)i; **B01J 37/00**(2006.01)i; **B01J 37/02**(2006.01)i; **B01J 37/08**(2006.01)i; **B01J 35/02**(2006.01)i; **C01B 7/04**(2006.01)i

According to International Patent Classification (IPC) or to both national classification and IPC

### B. FIELDS SEARCHED

Minimum documentation searched (classification system followed by classification symbols)

B01J 23/46; B01J 21/06; B01J 23/10; B01J 23/86; B01J 23/89; B01J 37/02; C01B 7/04; C01B 7/07; B01J 37/00; B01J 37/08; B01J 35/02

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 염화수소 (hydrogen chloride), 산화 (oxidation), 촉매 (catalyst), 루테늄 (ruthenium), 염소 (chlorine)

### C. DOCUMENTS CONSIDERED TO BE RELEVANT

| Category* | Citation of document, with indication, where appropriate, of the relevant passages | Relevant to claim No. |
|---|---|---|
| X | KR 10-2009-0084949 A (SUMITOMO CHEMICAL CO., LTD.) 05 August 2009. See paragraphs [0010]-[0023] and [0039]-[0051]; and claims 1-7. | 1-18 |
| A | KR 10-2014-0102205 A (SUMITOMO CHEMICAL CO., LTD.) 21 August 2014. See entire document. | 1-18 |
| A | JP 2014-522797 A (BAYER INTELLECTUAL PROPERTY GMBH) 08 September 2014. See entire document. | 1-18 |
| A | US 2017-0081187 A1 (COVESTRO DEUTSCHLAND AG ) 23 March 2017. See entire document. | 1-18 |

☑ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 January 2021** | **27 January 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2020/014259** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2017-0001178 A1 (WANHUA CHEMICAL GROUP CO., LTD. et al.) 05 January 2017. See entire document. | 1-18 |

Form PCT/ISA/210 (second sheet) (July 2019)

**INTERNATIONAL SEARCH REPORT**
**Information on patent family members**

International application No.

**PCT/KR2020/014259**

| Patent document cited in search report | | | Publication date (day/month/year) | Patent family member(s) | | | Publication date (day/month/year) |
|---|---|---|---|---|---|---|---|
| KR | 10-2009-0084949 | A | 05 August 2009 | CN | 101541423 | B | 10 October 2012 |
| | | | | CN | 101541423 | A | 23 September 2009 |
| | | | | EP | 2098290 | A1 | 09 September 2009 |
| | | | | EP | 2098290 | B1 | 26 August 2020 |
| | | | | JP | 2012-061472 | A | 29 March 2012 |
| | | | | JP | 2008-155199 | A | 10 July 2008 |
| | | | | JP | 5382100 | B2 | 08 January 2014 |
| | | | | JP | 4935604 | B2 | 23 May 2012 |
| | | | | US | 8101538 | B2 | 24 January 2012 |
| | | | | US | 2010-0068126 | A1 | 18 March 2010 |
| | | | | WO | 2008-069114 | A1 | 12 June 2008 |
| KR | 10-2014-0102205 | A | 21 August 2014 | CN | 103987455 | B | 06 April 2016 |
| | | | | CN | 103987455 | A | 13 August 2014 |
| | | | | JP | 2013-139017 | A | 18 July 2013 |
| | | | | US | 2014-0335012 | A1 | 13 November 2014 |
| | | | | US | 9186652 | B2 | 17 November 2015 |
| | | | | WO | 2013-085064 | A1 | 13 June 2013 |
| JP | 2014-522797 | A | 08 September 2014 | CN | 103764548 | A | 30 April 2014 |
| | | | | EP | 2729408 | A1 | 14 May 2014 |
| | | | | KR | 10-2014-0048954 | A | 24 April 2014 |
| | | | | US | 2014-0241976 | A1 | 28 August 2014 |
| | | | | WO | 2013-004651 | A1 | 10 January 2013 |
| US | 2017-0081187 | A1 | 23 March 2017 | CN | 103796949 | A | 14 May 2014 |
| | | | | EP | 2729407 | A1 | 14 May 2014 |
| | | | | JP | 2014-520742 | A | 25 August 2014 |
| | | | | KR | 10-2014-0048956 | A | 24 April 2014 |
| | | | | US | 2014-0205533 | A1 | 24 July 2014 |
| | | | | WO | 2013-004649 | A1 | 10 January 2013 |
| US | 2017-0001178 | A1 | 05 January 2017 | CN | 104785271 | A | 22 July 2015 |
| | | | | CN | 104785271 | B | 22 February 2017 |
| | | | | EP | 3097976 | A1 | 30 November 2016 |
| | | | | EP | 3097976 | B1 | 11 November 2020 |
| | | | | US | 10226758 | B2 | 12 March 2019 |
| | | | | WO | 2015-109587 | A1 | 30 July 2015 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120040701
- KR 1020110107350

- KR 1020130100282

**Non-patent literature cited in the description**

- A CeO2/ZrO2-TiO2 Catalyst for the Selective Catalytic Reduction of NOx with NH. *Catalysts,* August 2018, 592